# EUROPÄISCHE PATENTSCHRIFT

(11) **EP 3 678 268 B1**
(45) Veröffentlichungstag und Bekanntmachung des Hinweises auf die Patenterteilung: **25.08.2021**
(21) Anmeldenummer: 19208433.3
(22) Anmeldetag: 12.11.2019
(51) Int. Cl.: H02B 1/01, H02B 1/20

(54) **RAHMENGESTELL FÜR EINE PRODUKTIONSZELLE**
FRAME FOR A PRODUCTION CELL
OSSATURE POUR UNE CELLULE DE PRODUCTION

(30) Priorität: 07.01.2019 DE 102019100161
(43) Veröffentlichungstag der Anmeldung: 08.07.2020
(73) Patentinhaber: Otto Schimscha Metallbau GmbH, 74747 Ravenstein-Erlenbach (DE)
(72) Erfinder: SCHIMSCHA, Michael, 97959 Assamstadt (DE)
(74) Vertreter: advotec.

(56) Entgegenhaltungen:
- EP-B1- 2 124 302
- CN-A- 108 666 874

## Beschreibung

Die Erfindung betrifft ein Rahmengestell für eine Produktionszelle nach dem Oberbegriff des Anspruchs 1.

Gattungsgemäße Rahmengestelle werden in der Produktionstechnik verwendet, um bestimmte Funktionsbereiche in einer modularen Aufbauweise zu realisieren. Die Rahmengestelle können dabei in standardisierter Form vorgefertigt werden, um damit beispielsweise bestimmte Produktionslinien durch Kombination mehrerer Rahmengestelle zu realisieren.

Aus der EP 2 124 302 B1 ist ein gattungsgemäßes Rahmengestell bekannt, das zur Realisation einer Prüfzelle dient. Gattungsgemäß sind diese Rahmengestelle dadurch charakterisiert, dass sie aus vertikalen Pfosten und daran befestigten horizontalen Querstreben gebildet sind. Um für die Funktion der Produktionsfälle erforderliche Leitungen, beispielsweise elektrische Leitungen oder hydraulische bzw. pneumatische Versorgungsleitungen, einfach verlegen zu können, weisen die Querstreben an zumindest einer Stirnseite und an zumindest einer Längswandung Durchführungen für die zu verlegenden Leitungen auf. Soweit zur Herstellung der Streben offene Kastenprofile verwendet werden, kann die Durchführung an der Längswandung des Kastenprofils von dem offenen Abschnitt des offenen Kastenprofils gebildet sein. An den Befestigungsstellen der Pfosten sind den Durchführungen der Querstreben gegenüberliegend wiederum Durchführungen für den Durchtritt der Leitungen vorgesehen, so dass beim Verlegen der Leitungen entsprechende Übergänge zwischen den Pfosten und den Querstreben vorhanden sind.

Bei dem in der EP 2 124 302 B1 beschriebenen Rahmengestell sind an der Stirnseite der Querstreben jeweils separate Kopfplatten befestigt, mit denen die Querstreben an den Pfosten fixiert werden können. Dazu können die Kopfplatten beispielsweise entsprechend geeignete Befestigungsausnehmungen aufweisen, um die Querstreben mit den daran befestigten Kopfplatten durch Anbringung von Befestigungsschrauben an den Pfosten fixieren zu können. Außerdem weisen die Kopfplatten einen Ausschnitt auf, der als Durchführung für die Verlegung der Leitungen zwischen den Pfosten und den Querstreben dient.

Diese Art der Querstreben mit stirnseitig angebrachten Kopfplatten hat den Nachteil, dass die Produktion dieser Querstreben teuer und zeitaufwendig ist. Denn die Kopfplatten müssen als separates Bauteil gefertigt und anschließend mit einem geeigneten Befestigungsverfahren, beispielsweise durch Anschweißen, an der Stirnseite der Querstreben befestigt werden. Beim Anschweißen der Kopfplatten an die Querstreben bildenden Kastenprofile ist die Einhaltung enger Fertigungstoleranzen notwendig, um einen exakten Sitz der Querstreben an den Befestigungsstellen der Pfosten zu realisieren. Da auch hohe Kräfte von den Querstreben in die Kopfplatten und von dort in die Pfosten übertragen werden müssen, ist außerdem eine entsprechend hohe Festigkeit der Schweißnähte gefordert, die einen hohen Wärmeeintrag bei der Bildung der Schweißverbindungen erfordert.

Die CN 108 666 874 A beschreibt eine Konstruktion für einen Schaltschrank, dessen Rahmen aus zumindest zwei gebogenen Profilabschnitten sowie Querstreben gebildet ist.

Ausgehend von diesem Stand der Technik ist es deshalb Aufgabe der vorliegenden Erfindung, ein Rahmengestell vorzuschlagen, dessen Querstreben das einfache Verlegen von Leitungen erlauben und dabei kostengünstig gefertigt werden können.

Diese Aufgabe wird durch ein Rahmengestell mit Querstreben nach der Lehre des Anspruchs 1 gelöst.

Vorteilhafte Ausführungsformen der Erfindung sind Gegenstand der Unteransprüche.

Das erfindungsgemäße Rahmengestell wird durch Querstreben charakterisiert, die stirnseitig jeweils zumindest eine Befestigungslasche aufweisen, mit der die Querstreben an den Pfosten befestigt werden können. Diese Befestigungslaschen werden dabei nicht, wie aus dem Stand der Technik bekannt, als separates Bauteil gefertigt und anschließend mit der Querstrebe verbunden, beispielweise angeschweißt. Stattdessen ist es vorgesehen, dass die Befestigungslaschen jeweils einstückig mit einer Längswandung der Querstrebe verbunden sind. Die Befestigungslasche selbst wird durch Ausschneiden und Umbiegen eines Endabschnitts der Längswandung der Querstrebe gebildet. Da also die Befestigungslasche aus der Längswandung der Querstrebe selbst gebildet ist und somit einstückig mit der Längswandung der Querstrebe verbunden ist, entfällt die separate Fertigung und anschließende Befestigung eines Befestigungsmittels an der Querstrebe. Durch geeignete Fertigungsverfahren, beispielsweise durch Laserschneiden, kann die Befestigungslasche bei Einhaltung enger Fertigungstoleranzen sehr preisgünstig hergestellt werden. Auch das Umbiegen des zuvor ausgeschnittenen Endabschnitts der Längswandung kann preisgünstig und bei Einhaltung hoher Fertigungstoleranzen realisiert werden. Im Ergebnis werden also die aus dem Stand der Technik bekannten Kopfplatten mit dem separat zu fertigenden Ausschnitt und der anschließend herzustellenden Schweißverbindung an der Stirnseite der Querstrebe durch die erfindungsgemäßen Befestigungslaschen ersetzt. Die Größe der Befestigungslaschen ist dabei so zu wählen, dass nach dem Umbiegen des entsprechenden Endabschnitts der Längswandung ein ausreichender offener Querschnitt an der Stirnseite der Querstrebe verbleibt, durch den die Leitungen zum Pfosten hin verlegt werden können.

Bei der Befestigung der Querstrebe an den Pfosten können dann die umgebogenen Befestigungslaschen in einfacher Weise an den entsprechenden Befestigungsabschnitten der Pfosten zur Anlage kommen und dort mit geeigneten Befestigungsmitteln fixiert werden. Zur Erhöhung der mechanischen Belastbarkeit der Befestigungslaschen bei Befestigung der Querstrebe an den Pfosten ist es erfindungsgemäß vorgesehen, dass die zueinander weisenden Endabschnitte von benachbarten Befestigungslaschen durch ein Verbindungsmittel miteinander verbunden sind. Soweit höhere Kräfte auf die einzelnen Befestigungslaschen wirken, können diese Kräfte durch die Verbindungsmittel zwischen den einzelnen Befestigungslaschen übertragen und somit gleichmäßig verteilt werden. Außerdem wird eine deutlich höhere Verbindungssteifigkeit erreicht.

Um eine hohe mechanische Festigkeit der Verbindung zwischen den Querstreben und den Pfosten realisieren zu können, ist es erfindungsgemäß weiter vorgesehen , dass die Querstreben stirnseitig jeweils drei Befestigungslaschen aufweisen. Die drei Befestigungslaschen werden dabei durch Ausschneiden und Umbiegen der drei Längswandungen eines C-förmigen Kastenprofils gebildet. Die offene Seite des Kastenprofils ermöglicht dann die seitliche Herausführung der Leitungen aus dem Innenquerschnitt der Querstrebe entweder zum Innenraum der Produktionszelle oder zur Außenseite der Produktionszelle hin. Dadurch, dass die drei Befestigungslaschen ebenfalls einen offenen Endquerschnitt an der Stirnseite des offenen Kastenprofils bilden, wird es außerdem möglich, die Querstreben auch nach dem Verlegen von Leitungen einzeln zu demontieren. Denn die in der Produktionszelle verlegten Leitungen können bei der Demontage der Querstreben durch den offenen Endquerschnitt herausgeführt werden.

Um eine möglichst vollflächige Anlage der an der Stirnseite der Querstreben vorgesehenen Befestigungslaschen an dem gegenüberliegenden Befestigungsabschnitt der Pfosten realisieren zu können, ist es besonders vorteilhaft, wenn die zueinander weisenden Endabschnitte von benachbarten Befestigungslaschen jeweils eine Gehrung aufweisen.

Weiterhin ist es besonders vorteilhaft, wenn die zueinander weisenden Endabschnitte von benachbarten Befestigungslaschen im Bereich der Ecken des C-förmigen Kastenprofils einen Freischnitt aufweisen. Auf diese Weise kann nämlich beim Umbiegen der Befestigungslaschen eine unerwünschte Verformung der Längswandung der Querstreben und/oder der Befestigungslaschen vermieden werden.

In welcher Weise die Verbindungsmittel zwischen den zueinander weisenden Endabschnitten von benachbarten Befestigungslaschen ausgebildet sind, ist grundsätzlich beliebig. Gemäß einer bevorzugten Ausführungsform wird das Verbindungsmittel in der Art einer Verbindungsplatte ausgebildet. Diese Verbindungsplatte kann beispielsweise beim Verschrauben der Befestigungslaschen an den Pfosten hinter den Befestigungslaschen zur Anlage gebracht und mit den Befestigungsschrauben gemeinsam verschraubt werden.

Alternativ zur Verwendung von Verbindungsplatten kann das Verbindungsmittel zur Verbindung der zueinander weisenden Endabschnitte von benachbarten Befestigungslaschen auch in der Art einer Schweißnaht ausgebildet werden.

Mit welchen Befestigungsmitteln die Befestigungslaschen an den zugeordneten Befestigungsabschnitten der Pfosten fixiert werden, ist grundsätzlich beliebig. Gemäß einer bevorzugten Variante ist es vorgesehen, dass die Befestigungslasche an der Querstrebe zumindest eine Ausnehmung aufweist, die von einer Befestigungsschraube durchgriffen werden kann. Auf diese Weise können die Querstreben dann durch Anbringung der Befestigungsschrauben in einfacher Weise an den Pfosten des Rahmengestells verschraubt werden.

Verschiedene Ausführungsformen der Erfindung sind in den Zeichnungen schematisiert dargestellt und werden nachfolgend beispielhaft erläutert. Es zeigen:
- **Fig. 1**: ein Rahmengestell einer Produktionszelle in perspektivischer seitlicher Ansicht;
- **Fig. 2**: die Produktionszelle gemäß Fig. 1 in einer Explosionsdarstellung;
- **Fig. 3**: eine nicht zur Erfindung gehörende Querstrebe zur Verwendung in einer gattungsgemäß bekannten Produktionszelle in seitlicher Ansicht;
- **Fig. 4**: die Stirnseite der Querstrebe gemäß Fig. 3 in seitlicher perspektivischer Ansicht;
- **Fig. 5**: eine erste Ausführungsform einer Querstrebe in seitlicher Ansicht;
- **Fig. 6**: eine zweite Ausführungsform einer Querstrebe in seitlicher Ansicht.

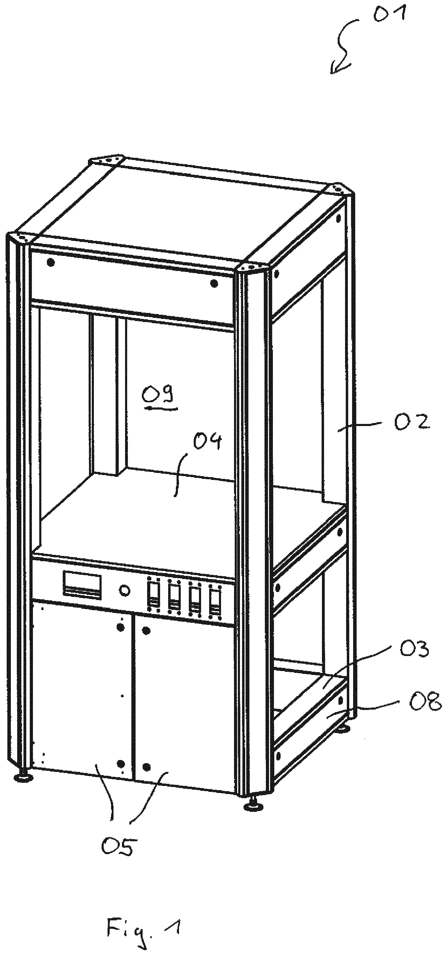

**Fig. 1** zeigt ein Rahmengestell 01, das beispielsweise als Prüfzelle oder in einer sonstigen Weise zum Aufbau einer Produktionsanlage verwendet werden kann. Das Rahmengestell ist aus vertikalen Pfosten 02 und daran befestigten horizontalen Querstreben 03 gebildet. Die Querstreben werden dabei in einem räumlichen Raster stirnseitig an den Pfosten fixiert, beispielsweise verschraubt. Je nach Anwendungsfall können an den Pfosten und/oder an den Querstreben jeweils benötigte Zusatzeinrichtungen, beispielsweise Platten 04 oder Türen 05, befestigt werden.

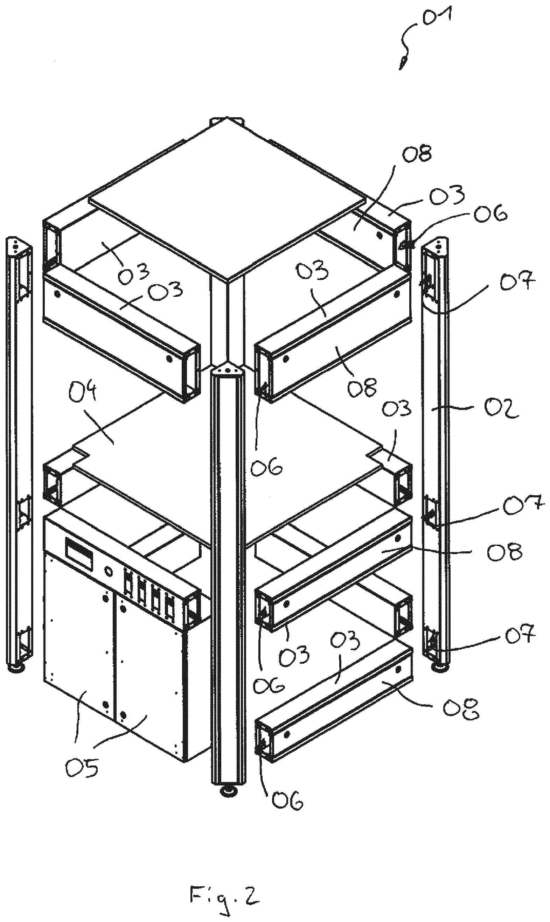

**Fig. 2** zeigt das Rahmengestell 01 in einer Explosionsdarstellung. Man erkennt, dass die Querstreben 03 stirnseitig jeweils Durchführungen 06 aufweisen, die mit Durchführungen 07 an den Pfosten 02 korrespondieren. Nach Befestigung der Querstreben 03 an den Pfosten 02 liegen die Durchführungen 06 und 07 einander kongruierend gegenüber, so dass Leitungen, beispielsweise Stromleitungen, hydraulische Leitungen oder pneumatische Leitungen problemlos zwischen den Innenquerschnitten der Pfosten 02 und den Querstreben 03 verlegt werden können.

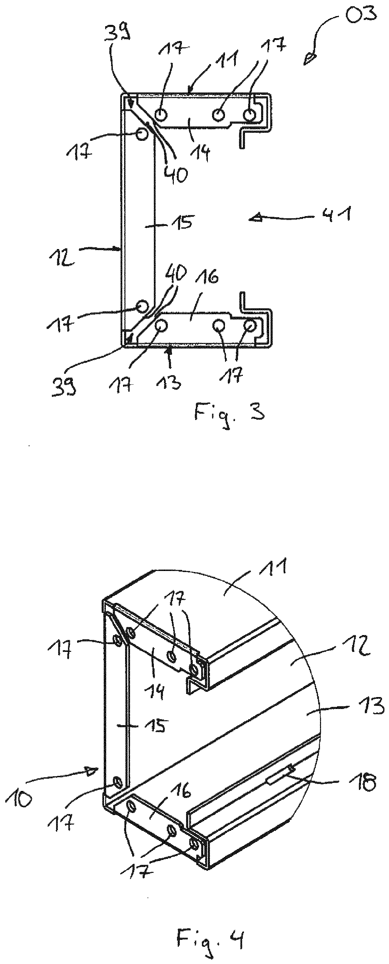

Die Querstreben 03 sind in der Art von C-förmigen, offenen Kastenprofilen ausgebildet, wobei die offene Seite der Kastenprofile jeweils Durchführungen 41 (siehe Fig. 3) für Leitungen bildet, die durch Abdeckungen 08, beispielsweise aus Kunststoff, verschlossen werden können. An der offenen Seite der als Kastenprofile ausgebildeten Querstreben 03 können die an der Durchführung 06 eingeführten Leitungen dann problemlos in den Innenraum 09 (siehe Fig. 1) des Rahmengestells oder an die Außenseite des Rahmengestells 01 herausgeführt werden.

**Fig. 3** zeigt die Stirnseite 10 (siehe Fig. 4) einer gattungsgemäß bekannten Querstrebe 03 in seitlicher Ansicht. Das als C-förmig ausgebildete, offene Kastenprofil mit seinen drei Längswandungen 11, 12 und 13 weist stirnseitig drei Befestigungslaschen 14, 15 und 16 auf. Die drei Befestigungslaschen 14, 15 und 16 werden durch Ausschneiden, insbesondere Laserschneiden, der Endabschnitte an den Längswandungen 11, 12 und 13 und anschließendes Umbiegen der ausgeschnittenen Endabschnitte um 90° gebildet. Auf diese Weise sind die Befestigungslaschen 14, 15 und 16 einstückig mit den Längswandungen 11, 12 und 13 verbunden und können in einfacher Weise unter Einhaltung hoher Fertigungstoleranzen hergestellt werden. Die Befestigungslaschen 14, 15 und 16 weisen jeweils zwei bzw. drei Ausnehmungen 17 auf. Bei der Befestigung der Querstreben 03 an den Pfosten 02 können die Ausnehmungen 17 von geeigneten Befestigungsschrauben durchgriffen und dadurch die Querstreben 03 an den Pfosten 02 verschraubt werden.

Um eine unerwünschte Verformung der Längswandungen 11, 12 und 13 beim Umbiegen der Befestigungslaschen 14, 15 und 16 zu vermeiden, ist ein Freischnitt 39 zwischen den zueinander weisenden Endabschnitten der benachbarten Befestigungslaschen 14 und 15 bzw. 15 und 16 vorgesehen. Außerdem weisen die entsprechenden Endabschnitte der Befestigungslaschen 14, 15 und 16 an den zueinander weisenden Endabschnitten jeweils eine Gehrung 40 auf.

**Fig. 4** zeigt die Querstrebe 03 mit ihrer Stirnseite 10 in perspektivischer seitlicher Ansicht. An der offenen Seite des C-förmigen Kastenprofils sind Ausnehmungen 18 vorgesehen, an denen die Abdeckungen 08 formschlüssig eingehängt werden können.

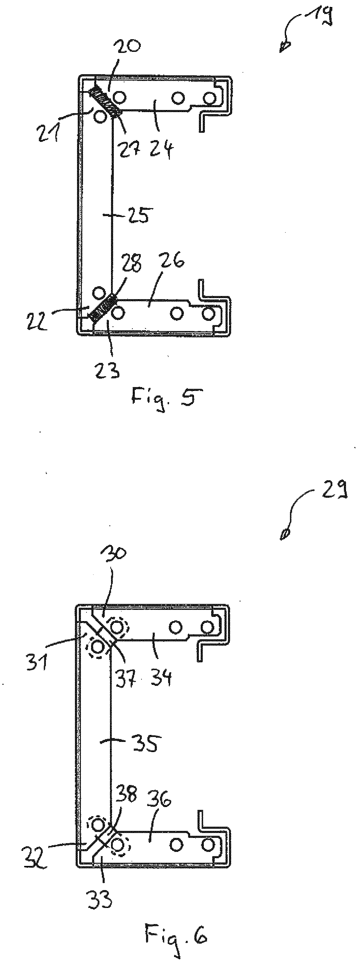

**Fig. 5** zeigt eine erste Ausführungsform 19 einer Querstrebe, die ebenfalls an den Pfosten 02 zur Bildung eines Rahmengestells verschraubt werden kann. Zur Erhöhung der Festigkeit und Verbindungssteifigkeit sind die zueinander weisenden Endabschnitte 20 und 21 bzw. 22 und 23 der Befestigungslaschen 24, 25 und 26 bei der Querstrebe 19 durch Schweißnähte 27 und 28 stoffschlüssig miteinander verbunden.

**Fig. 6** zeigt eine zweite Ausführungsform 29 einer Querstrebe zur Bildung eines Rahmengestells. Bei der Querstrebe 29 sind zur Erhöhung der Festigkeit und der Verbindungssteifigkeit zwischen den zueinander weisenden Endabschnitten 30 und 31 bzw. 32 und 33 der Befestigungslaschen 34, 35 und 36 jeweils Verbindungsplatten 37 und 38 vorgesehen. Die Verbindungsplatten 37 und 38 weisen formkongruente Ausnehmungen zu den Ausnehmungen 17 (siehe Fig. 4) an den Befestigungslaschen 34, 35 und 36 auf, so dass sie bei Anbringung der Befestigungsschrauben an der Querstrebe 29 zugleich fixiert werden können.

## Patentansprüche

1. Rahmengestell (01) für eine Produktionszelle, mit vertikalen Pfosten (02) und horizontalen Querstreben (19, 29), wobei die Querstreben (19, 29) an ihren Enden mit den Pfosten (02) verbunden sind, und wobei die Querstreben (19,29) in einem räumlichen Raster stirnseitig mit den Pfosten (02) verbunden sind, und wobei die Querstreben (19, 29) an zumindest einer Stirnseite (10) und an zumindest einer Längswandung Durchführungen (41) für Leitungen aufweisen, und wobei die Pfosten (02) an Befestigungsstellen, an denen die Querstreben (19, 29) befestigt sind, jeweils Durchführungen (07) für den Durchtritt von Leitungen aufweisen, **dadurch gekennzeichnet, dass** die Querstreben (19, 29) stirnseitig jeweils zumindest eine Befestigungslasche (24, 25, 26, 34, 35, 36) aufweisen, mit der die Querstreben an den Pfosten (02) befestigt werden können, wobei die Befestigungslasche einstückig mit einer Längswandung (11, 12, 13) der Querstrebe verbunden ist, und wobei die Befestigungslasche durch Ausschneiden und Umbiegen eines Endabschnitts der Längswandung (11, 12, 13) der Querstrebe gebildet ist, und wobei die zueinander weisenden Endabschnitte (20, 21, 22, 23, 30, 31, 32, 33) von benachbarten Befestigungslaschen (24, 25, 26, 34, 35, 36) durch ein Verbindungsmittel miteinander verbunden sind, wobei die Querstreben (19, 29) stirnseitig jeweils drei Befestigungslaschen (24, 25, 26, 34, 35, 36), aufweisen, die einstückig mit drei ein C-förmiges Kastenprofil bildenden Längswandungen (11, 12, 13) der Querstrebe (19, 29) verbunden sind.

2. Rahmengestell nach Anspruch 1,
**dadurch gekennzeichnet,**
**dass** die zueinander weisenden Endabschnitte von benachbarten Befestigungslaschen jeweils eine Gehrung (40) aufweisen.

3. Rahmengestell nach Anspruch 1 oder 2,
**dadurch gekennzeichnet,**
**dass** die zueinander weisenden Endabschnitte von benachbarten Befestigungslaschen im Bereich der Ecken des C-förmigen Kastenprofils einen Freischnitt (39) aufweisen.

4. Rahmengestell nach einem der Ansprüche 1 bis 3,
**dadurch gekennzeichnet,**
**dass** das Verbindungsmittel in der Art einer Verbindungsplatte (38) ausgebildet ist.

5. Rahmengestell nach einem der Ansprüche 1 bis 3,
**dadurch gekennzeichnet,**
**dass** das Verbindungsmittel in der Art einer Schweißnaht (27) ausgebildet ist.

6. Rahmengestell nach einem der Anspruche 1 bis 5,
**dadurch gekennzeichnet,**
**dass** die Befestigungslaschen zumindest eine Ausnehmung (17) aufweisen, die bei der Befestigung der Querstreben (19, 29) an den Pfosten (02) von einer Befestigungsschraube durchgriffen werden kann.

## Claims

1. An assembly rack (01) for a manufacturing cell, having vertical posts (02) and horizontal cross members (19, 29), the ends of said cross members (19, 29) being connected to the posts (02), and the face sides of said cross members (19, 29) being connected to the posts (02) in a spatial grid, and at least one face side (10) of said cross members (19, 29) and at least one longitudinal wall of said cross members (19, 29) comprising feedthroughs (41) for lines or pipes, and said posts (02) comprising feedthroughs (07) for passing through lines or pipes at fastening points at which the cross members (19, 29) are fastened to said posts (02),
**characterised in that**
each of the face sides of the cross members (19, 29) comprises at least one fastening tab (24, 25, 26, 34, 35, 36) with the aid of which the cross members are fastened to the posts (02), each fastening tab being connected in one piece to a longitudinal wall (11, 12, 13) of the cross member, and each fastening tab being formed by cutting and bending an end piece of the longitudinal wall (11, 12, 13) of the cross member, and the end pieces (20, 21, 22, 23, 30, 31, 32, 33) which face each other, of adjacent fastening tabs (24, 25, 26, 34, 35, 36), being connected by way of a connecting means, each of the face sides of said cross members (19, 29) comprising three fastening tabs (24, 25, 26, 34, 35, 36) which are connected in one piece to three longitudinal walls (11, 12, 13) of the cross member (19, 29), said longitudinal walls (11, 12, 13) forming a C-shaped box section.

2. The assembly rack according to claim 1,
**characterised in that**
each of the end pieces of adjacent fastening tabs which face each other comprises a mitre (40).

3. The assembly rack according to any one of the claims 1 to 2,
**characterised in that**
the end pieces of adjacent fastening tabs which face each other comprise a cut-out (39) in the region of the corners of the C-shaped box section.

4. The assembly rack according to any one of the claims 1 to 3,
**characterised in that**
the connecting means is realised in the manner of a connecting plate (38).

5. The assembly rack according to any one of the claims 1 to 3,
**characterised in that**
the connecting means is realised in the manner of a weld seam (27).

6. The assembly rack according to any one of the claims 1 to 5,
**characterised in that**
the fastening tabs comprise at least one recess (17), a fastening screw being configured to reach through said recesses when the cross members (19, 29) are fastened to the posts (02).

## Revendications

1. Châssis (01) pour une cellule de fabrication, ayant des poteaux verticaux (02) et des traverses horizontales (19, 29), les extrémités desdites traverses (19, 29) étant reliées auxdits poteaux (02), et les faces frontales desdites traverses (19, 29) étant reliées aux poteaux (02) dans une grille spatiale, et au moins une face frontale (10) desdites traverses (19, 29) et au moins une paroi longitudinale desdites traverses (19, 29) comportant des traversées (41) pour des fils électriques ou des conduites, et lesdits poteaux (02) comportant des traversées (07) pour le passage de fils électriques ou de conduites à des points de fixation auxquels les traverses (19, 29) sont fixées auxdits poteaux (02),
**caractérisé en ce que**
chacune des faces frontales des traverses (19, 29) comporte au moins une éclisse de fixation (24, 25, 26, 34, 35, 36), les traverses étant fixées aux poteaux (02) à l'aide desdites éclisses de fixation (24, 25, 26, 34, 35, 36), chaque éclisse de fixation étant reliée d'une seule pièce à une paroi longitudinale (11, 12, 13) de la traverse, et chaque éclisse de fixation étant formée en coupant et fléchissant un bout de la paroi longitudinale (11, 12, 13) de la traverse, et les bouts (20, 21, 22, 23, 30, 31, 32, 33) d'éclisses de fixation (24, 25, 26, 34, 35, 36) adjacentes qui sont tournés l'un vers l'autre étant reliés par un moyen de liaison, chacune des faces frontales desdites traverses (19, 29) comportant trois éclisses de fixation (24, 25, 26, 34, 35, 36) qui sont reliées d'une seule pièce à trois parois longitudinales (11, 12, 13) de la traverse (19, 29), les parois longitudinales (11, 12, 13) formant un profilé en caisson en forme de C.

2. Châssis selon la revendication 1,
**caractérisé en ce que**
chacune des bouts d'éclisses de fixation qui sont tournés l'un vers l'autre comporte un onglet (40).

3. Châssis selon l'une quelconque des revendications 1 à 2,
**caractérisé en ce que**
les bouts d'éclisses de fixation qui sont tournés l'un vers l'autre comportent une découpure (39) dans la région des coins du profilé en caisson en forme de C.

4. Châssis selon l'une quelconque des revendications 1 à 3,
**caractérisé en ce que**
le moyen de liaison est réalisé à la manière d'une plaque de liaison (38).

5. Châssis selon l'une quelconque des revendications 1 à 3,
**caractérisé en ce que**
le moyen de liaison est réalisé à la manière d'un cordon de soudure (27).

6. Châssis selon l'une quelconque des revendications 1 à 5,
**caractérisé en ce que**
les éclisses de fixation comportent au moins un évidement (17) qui est configuré pour être pénétré par une vis de fixation lorsque les traverses (19, 29) sont fixées aux poteaux (02).
